# EUROPEAN PATENT APPLICATION

(11) **EP 4 769 679 A1**
(43) Date of publication of application: **01.07.2026**
(21) Application number: 25790744.4
(22) Date of filing: 17.04.2025
(51) Int. Cl.: H01M 50/102, H01M 50/105, H01M 50/183, H01M 50/172, H01M 50/595

(54) **BATTERY CELL, BATTERY CASE, AND METHOD FOR MANUFACTURING BATTERY CELL**

(30) Priority: 17.04.2024 KR 20240051538
(71) Applicant: LG Energy Solution, Ltd., Seoul 07335 (KR)
(72) Inventor: JEON, Young Je, Daejeon 34122 (KR); KO, Myung Hoon, Daejeon 34122 (KR); KIM, Nam Geol, Daejeon 34122 (KR)
(74) Representative: Goddar, Heinz J.
(86) International application number: PCT/KR2025/095231
(87) International publication number: WO 2025/221119

(57) **Abstract**

A battery cell according to an embodiment of the present disclosure includes an electrode assembly; and a battery case including a first cover portion and a second cover portion covering both sides of the electrode assembly in a thickness direction. A recessed terrace forming portion is formed at both edges of at least one of the first cover portion or the second cover portion, and the first cover portion and the second cover portion are sealed together at the terrace forming portion.

## Description

### TECHNICAL FIELD

### CROSS-REFERENCE TO RELATED APPLICATIONS

The present application claims priority to Korean Patent Application No. 10-2024-0051538 filed on April 17, 2024 in the Republic of Korea, the disclosure of which is incorporated herein by reference.

### TECHNICAL FIELD

The present disclosure relates to a battery case without a cup portion for accommodating an electrode assembly, a battery cell including the same and a method for manufacturing the same.

### BACKGROUND ART

As opposed to disposable primary batteries, secondary batteries can be recharged and have a wide range of applications such as digital cameras, mobile phones, laptop computers and hybrid electric vehicles. Secondary batteries may include, for example, nickel-cadmium batteries, nickel-metal hydride batteries, nickel-hydrogen batteries or lithium secondary batteries.

Among secondary batteries, many studies are being conducted on lithium secondary batteries having high energy density and discharge voltage, and recently, lithium secondary batteries are used in a manner of manufacturing pouch-type battery cells having flexibility and connecting to each other to form a module.

The pouch-type battery cell uses a pouch-type battery case as an outer packaging that covers an electrode assembly, and the electrode assembly has a structure in which a positive electrode plate and a negative electrode plate, each including an electrode active material are stacked with a separator interposed between them. A positive electrode tab is present on a side of the positive electrode plate, and a negative electrode tab is present on a side of the negative electrode plate. Each tab is connected to an electrode lead to establish a connection to an external circuit. The electrode assembly is sealed by the outer packaging or the pouch-type battery case.

The typical pouch-type battery case may be manufactured by forming a cup-shaped accommodation portion in which the electrode assembly is housed, through a forming process of a pouch sheet. The forming process forms the accommodation portion by applying force to parts of the pouch sheet using a mold and the pouch sheet may be over-stretched at the corner (vertex) of the accommodation portion, causing a reduction in remaining thickness and cracks. Due to these concerns, the depth of the accommodation portion formed through the forming process is limited by factors such as the elongation of the pouch sheet, and there is a limit to the thickness and capacity of the electrode assembly that can be housed in the accommodation portion.

In addition, a sealing portion formed by attaching parts of the pouch-type battery case to each other is formed by attaching the parts that have not been subjected to force in the forming process of the accommodation portion. Accordingly, due to the step between the sealing portion where forming is not done and the accommodation portion where forming is done, parts of the sealing portion extend beyond the width of the accommodation portion. The protruding part is generally referred to as bat-ear. The bat-ear causes an increase in dead space that does not contribute to the capacity of the secondary battery, resulting lower energy density of the secondary battery.

### SUMMARY

### TECHNICAL PROBLEM

The present disclosure is directed to providing a battery cell that can accommodate an electrode assembly having a larger thickness and does not have a bat-ear, leading to high energy density.

The present disclosure is further directed to providing a battery case included in the battery cell.

The present disclosure is further directed to providing a method for manufacturing the battery cell.

### TECHNICAL SOLUTION

A battery cell according to an embodiment of the present disclosure may include an electrode assembly; and a battery case including a first cover portion and a second cover portion covering both sides of the electrode assembly in a thickness direction. A recessed terrace forming portion may be formed at both edges of at least one of the first cover portion or the second cover portion, and the first cover portion and the second cover portion may be sealed together at the terrace forming portion.

The first cover portion may include a first edge portion where the terrace forming portion is not formed, the second cover portion may include a second edge portion where the terrace forming portion is not formed, the first edge portion and the second edge portion may be sealed together, and at least one of the first edge portion or the second edge portion may be folded to face the terrace forming portion.

The terrace forming portion may include a recessed first terrace forming portion at the both edges of the first cover portion; and a recessed second terrace forming portion at the both edges of the second cover portion, the second terrace forming portion being sealed with the first terrace forming portion.

The battery cell may further include an electrode lead connected to the electrode assembly and protruding out of the battery case. The terrace forming portion may be concave towards the electrode lead.

The battery cell may further include an insulator that wraps around a part of the electrode lead and is sealed with a part of the terrace forming portion.

The terrace forming portion may be open in a direction in which the electrode lead protrudes.

The terrace forming portion may include a sealing surface where sealing is done; a first peripheral surface connecting the first cover portion or the second cover portion to the sealing surface; and a pair of second peripheral surfaces connected to the sealing surface and the first peripheral surface and facing each other.

The first peripheral surface may face a direction parallel to the direction in which the electrode lead protrudes, and the pair of second peripheral surfaces may face each other in a width direction of the electrode lead.

The battery case may further include a connection portion connecting the first cover portion and the second cover portion integrally. The connection portion may be flat, and each of a first boundary between the connection portion and the first cover portion and a second boundary between the connection portion and the second cover portion may be folded.

A gap between the first terrace forming portion and the second terrace forming portion is equal to a width of the connection portion when the battery case may be unfolded.

The width of the connection portion may correspond to a thickness of the electrode assembly.

The connection portion may include a center portion that faces the electrode assembly; and an end portion extended from the center portion and connected to the terrace forming portion.

The terrace forming portion may include a sealing surface where sealing is done; a first peripheral surface connecting the first cover portion or the second cover portion to the sealing surface; and a pair of second peripheral surfaces connected to the sealing surface and the first peripheral surface and facing each other. One of the pair of second peripheral surfaces may be connected to the end portion.

The one of the pair of second peripheral surfaces may face the end portion and be in contact with or adjacent to the end portion.

The electrode assembly may be disposed between the both terrace forming portions, and a distance between the both terrace forming portions may correspond to one of a length or a width of the electrode assembly.

A length of the terrace forming portion may correspond to the other of the length or the width of the electrode assembly.

A battery case according to an embodiment of the present disclosure may be configured to accommodate an electrode assembly. The battery case may include a first cover portion covering a side of the electrode assembly in a thickness direction; and a second cover portion covering an opposite side of the electrode assembly in the thickness direction. A recessed terrace forming portion may be formed at both edges of at least one of the first cover portion or the second cover portion.

A method for manufacturing a battery cell according to an embodiment of the present disclosure may manufacture the battery cell including a battery case including a first cover portion and a second cover portion, and an electrode assembly housed in the battery case. The method for manufacturing the battery cell may include the steps of forming a recessed terrace forming portion at both edges of at least one of the first cover portion or the second cover portion; covering the electrode assembly with the first cover portion and the second cover portion on both sides in a thickness direction; and sealing the first cover portion and the second cover portion together at the terrace forming portion.

The first cover portion and the second cover portion may be connected integrally by a connection portion. The step of bringing the first cover portion and the second cover portion into contact with each other may include folding each of a first boundary between the connection portion and the first cover portion and a second boundary between the connection portion and the second cover portion.

The method for manufacturing the battery cell may further include the step of sealing the edge portions together where the terrace forming portion is not formed in the first cover portion and the second cover portion. The step of sealing the edge portions together where the terrace forming portion is not formed may include a process of folding at least one of the edge portion of the first cover portion or the edge portion of the second cover portion.

### ADVANTAGEOUS EFFECTS

According to an exemplary embodiment of the present disclosure, the first cover portion and the second cover portion of the battery case may be sealed together at the terrace forming portion. That is, on the basis of the completed battery cell, the concave side of the terrace forming portion may face the outside of the battery case. Accordingly, compared to the cup-shaped recessed accommodation portion of the battery case according to the related art, the terrace forming portion may be formed with larger depth so that the thick, high-capacity electrode assembly may be housed, thereby increasing the energy density of the battery cell.

In addition, there is no need to form the cup-shaped recessed accommodation portion for accommodating the electrode assembly in the battery case. Thus, a part of the sealing portion of the battery case that protrudes beyond the width of the accommodation portion (a so-called bat-ear) is not formed. Accordingly, this has a beneficial effect on increasing the energy density of the battery cell.

Besides, the effects of the embodiments of the present disclosure may include effects that can be easily predicted by those skilled in the art from the configurations according to the exemplary embodiments of the present disclosure.

### BRIEF DESCRIPTION OF THE DRAWINGS

The accompanying drawings illustrate exemplary embodiments of the present disclosure and together with the following detailed description, serve to provide a better understanding of the technical aspects of the present disclosure, and thus the present disclosure should not be construed as being limited to the drawings.
FIG. 1 is an assembly diagram of a battery cell according to a first embodiment of the present disclosure.
FIG. 2 is a perspective view showing the battery case of FIG. 1 in folded state.
FIG. 3 is a perspective view of the battery case shown in FIG. 1 when viewed from a different direction.
FIG. 4 is a side view of a battery cell according to a first embodiment of the present disclosure.
FIG. 5 shows a variation of a sealing portion shown in FIG. 4.
FIG. 6 is an assembly diagram of a battery cell according to a second embodiment of the present disclosure.
FIG. 7 is an assembly diagram of a battery cell according to a third embodiment of the present disclosure.
FIG. 8 is a perspective view showing the battery case of FIG. 7 in folded state.
FIG. 9 is an assembly diagram of a battery cell according to a fourth embodiment of the present disclosure.
FIG. 10 is a flowchart of a method for manufacturing a battery cell according to an embodiment of the present disclosure.

### DETAILED DESCRIPTION

Hereinafter, exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms appropriately for the best explanation.

In the drawings, each component of a secondary battery according to an embodiment of the present disclosure is schematically depicted, and the size of the component or the thickness of the line may be somewhat exaggerated for convenience of understanding.

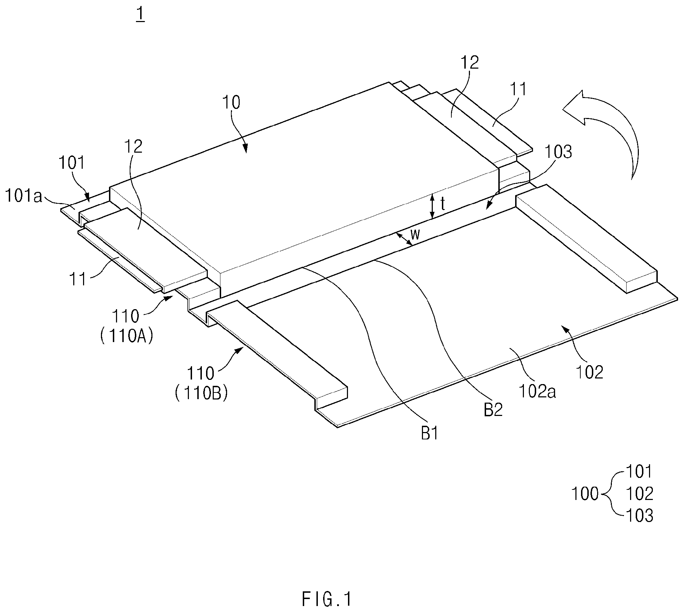

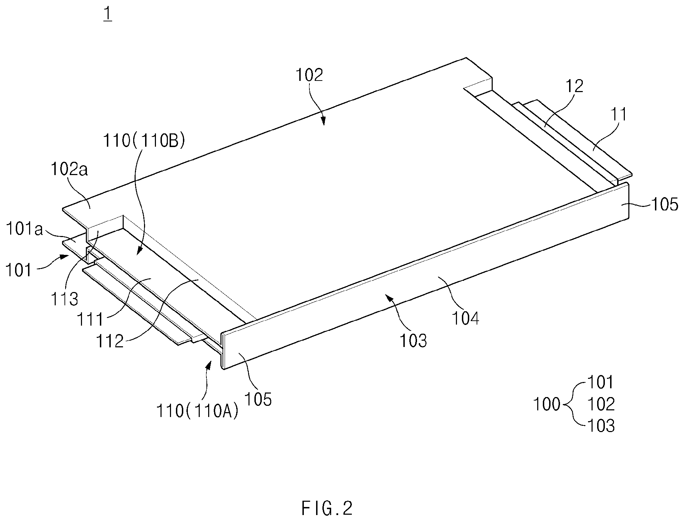

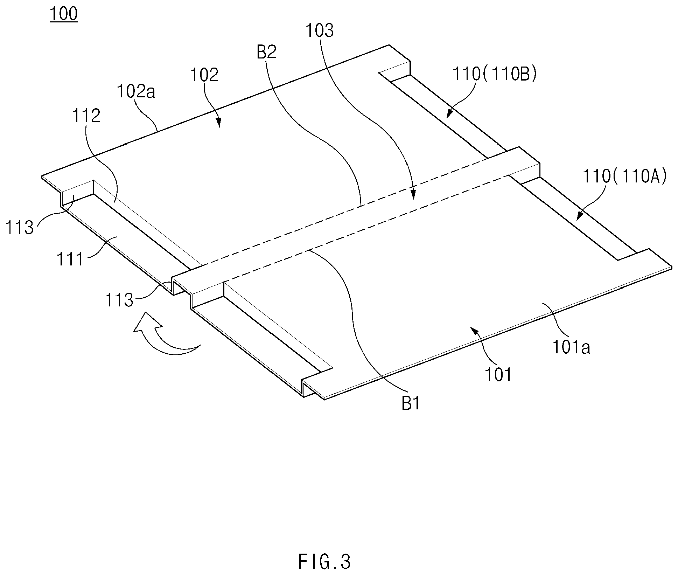

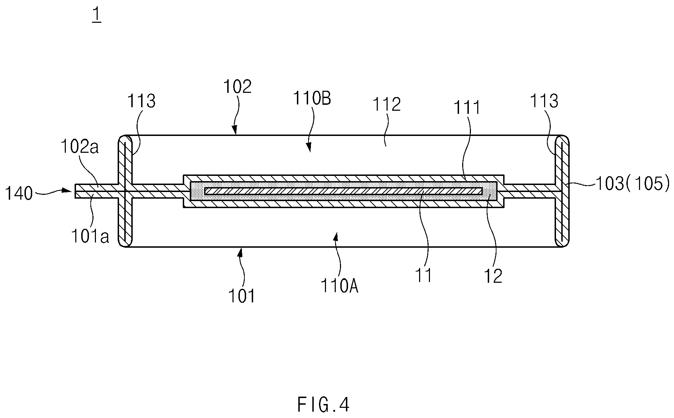

FIG. 1 is an assembly diagram of a battery cell according to a first embodiment of the present disclosure, FIG. 2 is a perspective view showing the battery case of FIG. 1 in folded state, FIG. 3 is a perspective view of the battery case shown in FIG. 1 when viewed from a different direction and FIG. 4 is a side view of the battery cell according to the first embodiment of the present disclosure.

The battery cell 1 according to the first embodiment of the present disclosure includes an electrode assembly 10 and a battery case 100. The battery cell 1 may further include an electrode lead 11 connected to the electrode assembly 10 and protruding out of the battery case 100.

The electrode assembly 10 may be formed by arranging a plurality of electrodes and a separator in an alternating manner. That is, each electrode assembly 10 may include the plurality of electrodes and the separator interposed between the plurality of electrodes to insulate the plurality of electrodes from each other.

The electrode assembly 10 is not limited to a particular type and may include a stack type, a jellyroll type, or a stack and folding type.

The electrode lead 11 may be connected to the electrode assembly 10. The electrode lead 11 may protrude out of the battery case 100. The electrode lead 11 may act as a passage of movement of an electric current between the electrode assembly 10 and an external load.

The electrode lead 11 may include a positive electrode lead connected to the positive electrode of the electrode assembly 10 and a negative electrode lead connected to the negative electrode of the electrode assembly 10. As shown in FIG. 1, the positive electrode lead and the negative electrode lead may protrude from the electrode assembly 10 in opposite directions. However, the present disclosure is not limited thereto, and the positive electrode lead and the negative electrode lead may protrude side by side in the same direction.

The battery cell 1 may further include an insulator 12 that wraps around a part of the electrode lead 11 and is sealed with a part of a terrace forming portion 110 as described below. The insulator 12 may insulate the electrode lead 11 from the battery case 100. More specifically, the insulator 12 may insulate the electrode lead 11 from the terrace forming portion 110. The insulator 12 may be an insulating tape attached to the electrode lead 11, but is not limited thereto.

Meanwhile, the battery case 100 may be a pouch-type battery case. That is, the battery case 100 may be manufactured by forming a pouch sheet. The pouch sheet may be a laminate sheet including first and second polymer layers at both outermost sides and a metal layer between the first and second polymer layers. However, the type of the battery case 100 is not limited thereto.

The following description is basically based on the battery case 100 in folded state (FIG. 2), but may relate to the battery case 100 in unfolded state (FIGS. 1 and 3) where necessary, and those skilled in the art will be able to appropriately understand the present disclosure according to the context or description.

The battery case 100 may include a first cover portion 101 and a second cover portion 102 covering both sides of the electrode assembly 10 in the thickness direction.

The first cover portion 101 may cover the electrode assembly 10 on one side in the thickness direction, and the second cover portion 102 may cover the electrode assembly 10 on the other side in the thickness direction.

The recessed terrace forming portion 110 may be formed at both edges of at least one of the first cover portion 101 or the second cover portion 102. The terrace forming portion 110 may be formed by a forming process. More specifically, the terrace forming portion 110 may be formed by applying force to an edge area of at least one of the first cover portion 101 or the second cover portion 102 having a sheet shape using a mold.

The concave side of the terrace forming portion 110 may face the outside of the battery case 100.

The both terrace forming portions 110 at the both edges of one of the first cover portion 101 and the second cover portion 102 may face each other in one direction of the length direction or the width direction of the electrode assembly 10. In addition, each terrace forming portion 110 may extend in the other direction of the length direction or the width direction of the electrode assembly 10. For example, as shown in FIG. 1, the both terrace forming portions 110 may face each other in the length direction of the electrode assembly 10, and each terrace forming portion 110 may extend in the width direction of the electrode assembly 10.

The electrode assembly 10 may be disposed between the both terrace forming portions 110. The distance between the both terrace forming portions 110 may correspond to one of the length or the width of the electrode assembly 10. Here, corresponding may refer to identical or similar. Accordingly, the electrode assembly 10 may be fitted between the both terrace forming portions 110, and the empty space in the battery case 100 may be reduced, thereby increasing the energy density of the battery cell 1.

In addition, the length of each terrace forming portion 110 may correspond to the other of the length or width of the electrode assembly 10. Here, corresponding may refer to identical or similar. Accordingly, the electrode assembly 10 may be fitted between a connection portion 103 and a sealing portion 140 as described below, and the empty space in the battery case 100 may be reduced, thereby increasing the energy density of the battery cell 1.

For example, referring to FIG. 1, the distance between the both terrace forming portions 110 may correspond to the length of the electrode assembly 10, and the length of each terrace forming portion 110 may correspond to the width of the electrode assembly 10.

The terrace forming portion 110 may be formed at a location corresponding to the electrode lead 11. More specifically, the terrace forming portion 110 may be concave towards the electrode lead 11. The electrode lead 11 may be adjacent to the terrace forming portion 110.

The terrace forming portion 110 may be open in the protruding direction of the electrode lead 11. More specifically, the terrace forming portion 110 may include a sealing surface 111, a first peripheral surface 112 and a second peripheral surface 113.

The sealing surface 111 may be a surface where sealing is done. The sealing surface 111 may be a bottom surface formed during forming of the terrace forming portion 110.

The first peripheral surface 112 may connect the first cover portion 101 or the second cover portion 102 to the sealing surface 111. The first peripheral surface 112 may be an inner surface of the terrace forming portion 110. The first peripheral surface 112 may be approximately perpendicular to the sealing surface 111. The first peripheral surface 112 may face a direction parallel to the protruding direction of the electrode lead 11. That is, the terrace forming portion 110 may be open in the direction in which the first peripheral surface 112 faces.

The second peripheral surface 113 may include a pair of second peripheral surfaces 113 that face each other. The pair of second peripheral surfaces 113 may face each other in the width direction of the electrode lead 12. The second peripheral surface 113 may be connected to the sealing surface 111 and the first peripheral surface 112. In the same way as the first peripheral surface 112, the second peripheral surface 113 may connect the first cover portion 101 or the second cover portion 102 to the sealing surface 111. The second peripheral surface 113 may be approximately perpendicular to the sealing surface 111 and the first peripheral surface 112.

In this embodiment, as shown in FIG. 1, the recessed terrace forming portion 110 may be formed at the both edges of each of the first cover portion 101 and the second cover portion 102. More specifically, the terrace forming portion 110 may include a recessed first terrace forming portion 110A at the both edges of the first cover portion 101, and a recessed second terrace forming portion 110B at the both edges of the second cover portion 102.

The first terrace forming portion 110A and the second terrace forming portion 110B may face each other with the electrode lead 11 interposed between them. More specifically, when the first cover portion 101 and the second cover portion 102 cover the electrode assembly 10 on the both sides, the sealing surface 111 of each of the first terrace forming portion 110A and the second terrace forming portion 110B may face each other with the electrode lead 11 and the insulator 12 interposed between them.

The first cover portion 101 and the second cover portion 102 may be sealed together at the terrace forming portion 110. In this embodiment, the first terrace forming portion 110A and the second terrace forming portion 110B may be sealed together.

More specifically, the first terrace forming portion 110A and the second terrace forming portion 110B may be sealed together such that their parts contact each other and the other parts contact the insulator 12. Even more specifically, the sealing surface 111 of the first terrace forming portion 110A and the sealing surface 111 of the second terrace forming portion 110B may be sealed together such that their parts may contact each other and the other parts contact the insulator 12.

Accordingly, the electrode lead 11 may pass between the first terrace forming portion 110A and the second terrace forming portion 110B and protrude out of the battery case 100.

The depth of the first terrace forming portion 110A may be equal to the depth of the second terrace forming portion 110B. However, the present disclosure is not limited thereto, and the depth of the first terrace forming portion 110A may be different from the depth of the second terrace forming portion 110B.

The sum of the depth of the first terrace forming portion 110A and the depth of the second terrace forming portion 110B may correspond to the thickness t of the electrode assembly 10. The term corresponding as used herein may refer to identical or similar, and the criterion for similarity may represent being similar with the deviation as large as the thickness of the coupled part of the electrode lead 11 and the insulator 12.

As described above, the battery case 100 according to the present disclosure may have the recessed terrace forming portion 110. Because the concave side of the terrace forming portion 110 faces the outside of the battery case 100, it may be possible to reduce the limit on the radius of curvature of the corner of the terrace forming portion 110 where the sealing surface 111, the first peripheral surface 112 and the second peripheral surface 112 meet. Thus, compared to the cup-shaped recessed accommodation portion of the battery case according to the related art, the terrace forming portion 110 may be formed with a larger depth. Accordingly, the battery case 100 according to the present disclosure may accommodate the thick, high-capacity electrode assembly 10 and this has a beneficial effect on increasing the energy density of the battery cell 1.

Meanwhile, the battery case 100 may further include the connection portion 103 connecting the first cover portion 101 and the second cover portion 102 together. That is, the battery case 100 including the first cover portion 101, the second cover portion 102 and the connection portion 103 may be manufactured by forming the single pouch sheet.

Each of a first boundary B1 between the connection portion 103 and the first cover portion 101 and a second boundary B2 between the connection portion 103 and the second cover portion 102 may be folded.

The connection portion 103 may extend parallel to the direction in which the both terrace forming portions 110 face each other. For example, the connection portion 103 may extend parallel to the length direction of the electrode assembly 10.

The connection portion 103 may face the electrode assembly 10. The connection portion 103 may be in contact with or adjacent to the electrode assembly 10.

The width W of the connection portion 103 may correspond to the thickness t of the electrode assembly 10. The width W of the connection portion 103 may be constant along the length direction of the connection portion 103.

When the battery case 100 is unfolded, the gap between the first terrace forming portion 110A and the second terrace forming portion 110B may be equal to the width W of the connection portion 103. The first terrace forming portion 110A and the second terrace forming portion 110B may be connected to the connection portion 103. More specifically, one second peripheral surface 113 of the first terrace forming portion 110A and one second peripheral surface 113 of the second terrace forming portion 110B may be connected to the connection portion 103.

The connection portion 103 may be flat. More specifically, a center portion 104 and an end portion 105 as described below may form the same plane. That is, compared to the battery cell according to the related art, an unnecessarily protruding portion (for example, a bat-ear) may be removed from the battery case 100, and the energy density of the battery cell 1 may be improved.

The connection portion 103 may include the center portion 104 and the end portion 105.

The center portion 104 may face the electrode assembly 10. The center portion 104 may be in contact with or adjacent to the electrode assembly 10. The length of the center portion 104 may be equal to the length or width of the electrode assembly 10.

The center portion 104 may be connected to the first cover portion 101 and the second cover portion 102. The boundary between the center portion 104 and the first cover portion 101 and the boundary between the center portion 104 and the second cover portion 102 may be folded at approximately 90°.

The end portion 105 may be extended from the center portion 104. The end portion 105 may include a pair of end portions 105. The pair of end portions 105 may define both end portions of the connection portion 103.

The end portion 105 may be connected to the terrace forming portion 110. The length of the end portion 105 may be the equal to the width of the terrace forming portion 110.

One of the pair of second peripheral surfaces 113 of each terrace forming portion 110 may be connected to the end portion 105. More specifically, one of the pair of second peripheral surfaces 113 of the first terrace forming portion 110A may be connected to one end of the end portion 105 in the width direction, and one of the pair of second peripheral surfaces 113 of the second terrace forming portion 110B may be connected to the other end of the end portion 105 in the width direction.

Referring to FIG. 2, one of the pair of second peripheral surfaces 113 of each terrace forming portion 110 may face the end portion 105. One of the pair of second peripheral surfaces 113 of each terrace forming portion 110 may be in contact with or adjacent to the end portion 105.

Meanwhile, referring to FIG. 4, the battery case 100 may have the sealing portion 140 where a first edge portion 101a of the first cover portion 101 and a second edge portion 102a of the second cover portion 102 are sealed together.

The terrace forming portion 110 may not be formed at the first edge portion 101a and the second edge portion 102a.

More specifically, the first cover portion 101 may include the first edge portion 101a where the first terrace forming portion 110A is not formed. The second cover portion 102 may include the second edge portion 102a where the second terrace forming portion 110B is not formed.

The first edge portion 101a and the second edge portion 102a may be sealed together. That is, the sealed part of the first edge portion 101a and the second edge portion 102a may be defined as the sealing portion 140.

The first edge portion 101a may be disposed on one side of the first cover portion 101. The second edge portion 102a may be disposed on one side of the second cover portion 102. More specifically, the first edge portion 101a and the second edge portion 102a may be disposed on the opposite side to the connection portion 103. Accordingly, the sealing portion 140 where the first edge portion 101a and the second edge portion 102a are sealed together may be disposed on the opposite side to the connection portion 103.

Each terrace forming portion 110 may be connected to the first edge portion 101a or the second edge portion 102a. More specifically, the first terrace forming portion 110A may be connected to the first edge portion 101a, and the second terrace forming portion 110B may be connected to the second edge portion 102a. Even more specifically, one of the pair of second peripheral surfaces 113 of the first terrace forming portion 110A may be connected to the first edge portion 101a, and one of the pair of second peripheral surfaces 113 of the second terrace forming portion 110B may be connected to the second edge portion 102a.

At least one of the first edge portion 101a or the second edge portion 102a may be folded. More specifically, at least one of the first edge portion 101a or the second edge portion 102a may be folded to face the terrace forming portion 110. At least one of the first edge portion 101a or the second edge portion 102a may be folded to bring it into contact with or close to the terrace forming portion 110.

For example, as shown in FIG. 4, each of the first edge portion 101a and the second edge portion 102a may be folded to face the terrace forming portion 110.

A part of the folded first edge portion 101a may be in contact with or adjacent to the second peripheral surface 113 of the first terrace forming portion 110A. A part of the folded second edge portion 102a may be in contact with or adjacent to the second peripheral surface 113 of the second terrace forming portion 110B. The other part of the folded first edge portion 101a and the other part of the folded second edge portion 102a are sealed together to form the sealing portion 140.

One of the pair of second peripheral surfaces 113 of the first terrace forming portion 110A may be in contact with or adjacent to the connection portion 103, and the other may be in contact with or adjacent to the folded first edge portion 101a. One of the pair of second peripheral surfaces 113 of the second terrace forming portion 110B may be in contact with or adjacent to the connection portion 103, and the other may be in contact with or adjacent to the folded second edge portion 102a.

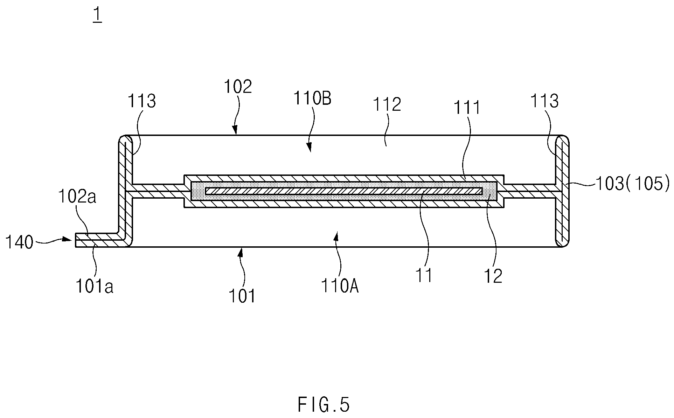

FIG. 5 shows a variation of the sealing portion shown in FIG. 4.

One of the first edge portion 101a and the second edge portion 102a may be folded to face the terrace forming portion 110. The following description is made, taking as an example the second edge portion 102a being folded as shown in FIG. 5.

A part of the folded second edge portion 102a may be in contact with or adjacent to the second peripheral surface 113 of the first terrace forming portion 110A, other part may be in contact with or adjacent to the second peripheral surface 113 of the second terrace forming portion 110B, and another part of the folded second edge portion 102a may be sealed with the first edge portion 101a to form the sealing portion 140.

One of the pair of second peripheral surfaces 113 of each of the first terrace forming portion 110A and the second terrace forming portion 110B may be in contact with or adjacent to the connection portion 103, and the other may be in contact with or adjacent to the folded second edge portion 102a.

Although not shown in FIGS. 4 and 5, the sealing portion 140 may be Single Side Folded (SSF) or Double Side Folded (DSF).

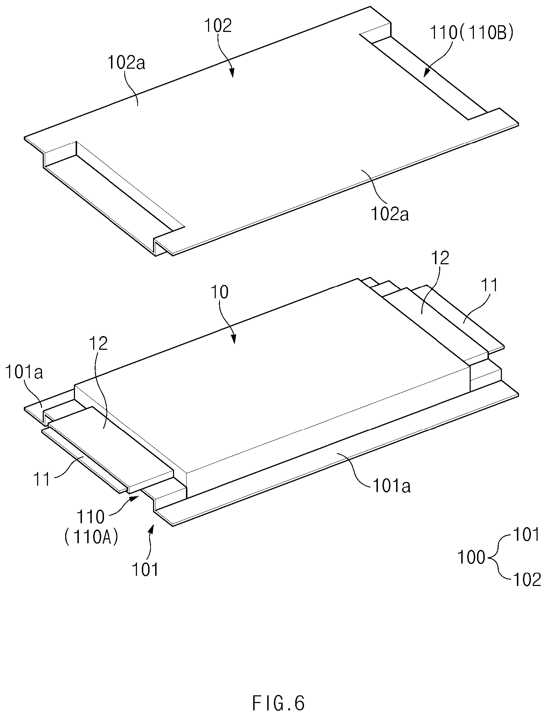

FIG. 6 is an assembly diagram of the battery cell according to a second embodiment of the present disclosure.

The second embodiment is the same as the first embodiment described above, except that the battery case 100 does not include the connection portion 103, so the description that is shared between the first embodiment and the second embodiment is omitted and difference(s) will be described below.

In this embodiment, the first cover portion 101 and the second cover portion 102 of the battery case 100 may be separately manufactured. That is, the first cover portion 101 and the second cover portion 102 may be separately manufactured by forming a plurality of pouch sheets.

As described above, the recessed terrace forming portion 110 may be formed at the both edges of at least one of the first cover portion 101 or the second cover portion 102. In this embodiment, as shown in FIG. 6, the recessed terrace forming portion 110 may be formed at the both edges of each of the first cover portion 101 and the second cover portion 102.

The first edge portion 101a may be disposed on the both sides of the first cover portion 101. The second edge portion 102a may be disposed on the both sides of the second cover portion 102. Accordingly, the sealing portion 140 (see FIG. 4 or 5) where the first edge portion 101a and the second edge portion 102a are sealed together may be formed on the both sides of the battery case 100. The electrode assembly 10 may be disposed between the both sealing portions 140.

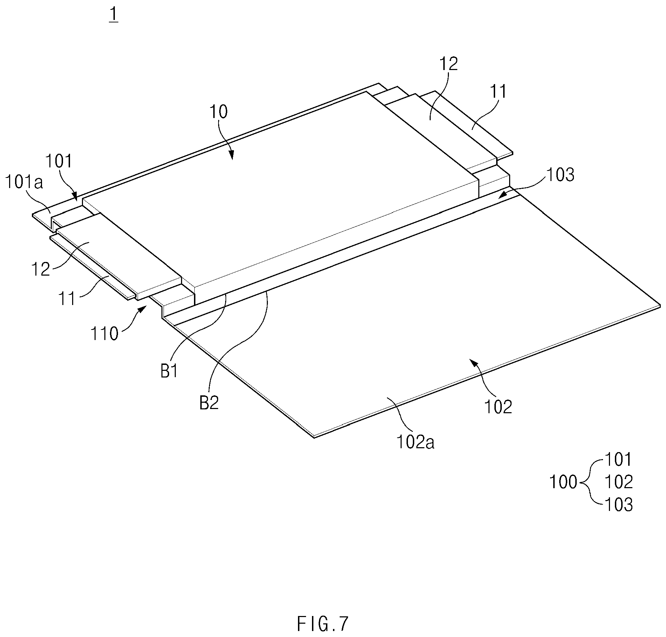

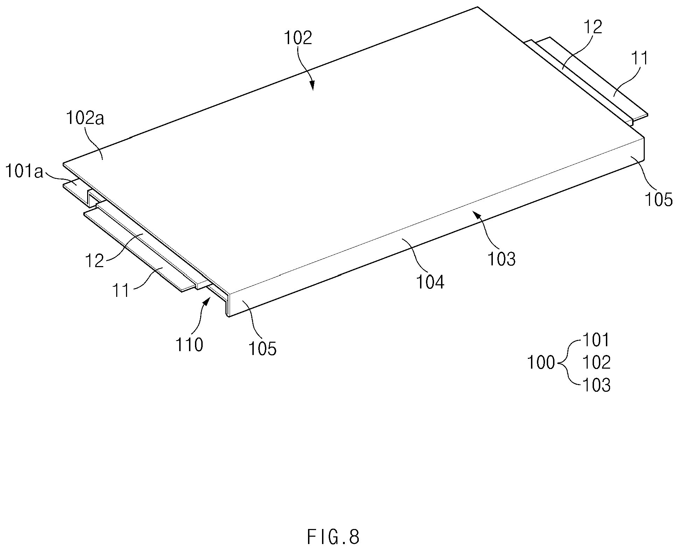

FIG. 7 is an assembly diagram of the battery cell according to a third embodiment of the present disclosure, and FIG. 8 is a perspective view showing the battery case of FIG. 7 in folded state.

The third embodiment is the same as the first embodiment described above, except that the terrace forming portion 110 is not formed in one of the first cover portion 101 and the second cover portion 102, so the description that is shared between the first embodiment and the third embodiment is omitted and difference(s) will be described below.

In this embodiment, as shown in FIG. 7, the recessed terrace forming portion 110 may be formed at the both edges of the first cover portion 101, and the terrace forming portion 110 may not be formed in the second cover portion 102.

The first cover portion 101 and the second cover portion 102 may be sealed together at the terrace forming portion 110. In this embodiment, the both terrace forming portions 110 of the first cover portion 101 may be sealed with the both edge portions of the second cover portion 102.

More specifically, the terrace forming portion 110 of the first cover portion 101 and the both edges of the second cover portion 102 may be sealed such that their parts contact each other and the other parts contact the insulator 12. Even more specifically, the sealing surface 111 of the terrace forming portion 110 of the first cover portion 101 and the both edges of the second cover portion 102 may be sealed together such that their parts contact each other and the other parts contact the insulator 12.

Accordingly, the electrode lead 11 may pass between the terrace forming portion 110 of the first cover portion 101 and the second cover portion 102 and protrude out of the battery case 100.

The depth of the terrace forming portion 110 may correspond to the thickness (t) of the electrode assembly 10. The term corresponding as used herein may refer to identical or similar, and the criterion for similarity may represent being similar with the deviation as large as the thickness of the coupled part of the electrode lead and the insulator.

The terrace forming portion 110 may be connected to the connection portion 103, to be more specific, the end portion 105. More specifically, one of the pair of second peripheral surfaces 113 of the terrace forming portion 110 may be connected to one end of the end portion 105 in the width direction.

One of the pair of second peripheral surfaces 113 of the terrace forming portion 110 may face the end portion 105. One of the pair of second peripheral surfaces 113 of the terrace forming portion 110 may be in contact with or adjacent to the end portion 105.

However, in the same way as the second embodiment described above, the battery case 100 may not include the connection portion 103.

Although not shown in FIG. 8, the battery case 100 may have the sealing portion 140 where the first edge portion 101a of the first cover portion 101 and the second edge portion 102a of the second cover portion 102 are sealed together (see FIGS. 4 and 5).

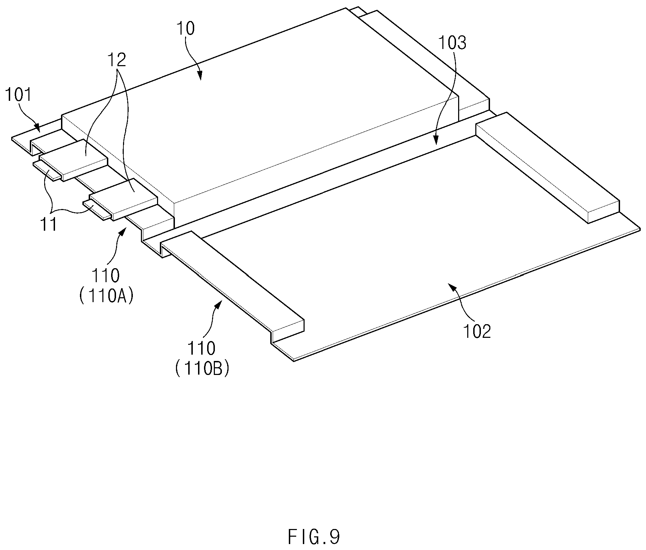

FIG. 9 is an assembly diagram of the battery cell according to a fourth embodiment of the present disclosure.

The fourth embodiment is the same as the first embodiment described above, except that the both electrode leads 11 protrude side by side in the same direction, so the description that is shared between the first embodiment and the fourth embodiment is omitted and difference(s) will be described below.

The electrode lead 11 may include the positive electrode lead connected to the positive electrode of the electrode assembly 10 and the negative electrode lead connected to the negative electrode of the electrode assembly 10. In this embodiment, the positive electrode lead and the negative electrode lead may extend side by side in the same direction.

The insulator 12 may be present for each of the both electrodes leads 11. However, the present disclosure is not limited thereto, and a single insulator 12 may wrap the both electrode leads 11 together.

Hereinafter, for convenience of description, the first terrace forming portion 110A at one edge of the first cover portion 101 is referred to as 'one first terrace forming portion 110A', and the first terrace forming portion 110A at the other edge of the first cover portion 101 is referred to as 'the other first terrace forming portion 110A'. Likewise, the second terrace forming portion 110B at one edge of the second cover portion 102 is referred to as 'one second terrace forming portion 110B', and the second terrace forming portion 110B at the other edge of the second cover portion 102 is referred to as 'the other second terrace forming portion 110B'.

One first terrace forming portion 110A and one second terrace forming portion 110B may face each other with the both electrode leads 11 interposed between them.

More specifically, when the first cover portion 101 and the second cover portion 102 cover the electrode assembly 10 on both sides, the sealing surface 111 of each of one first terrace forming portion 110A and one second terrace forming portion 110B may face each other with the electrode lead 11 and the insulator 12 interposed between them.

One first terrace forming portion 110A and one second terrace forming portion 110B may be sealed together such that their parts contact each other and the other parts contact the insulator 12. More specifically, the sealing surface 111 of one first terrace forming portion 110A and the sealing surface 111 of one second terrace forming portion 110B may be sealed together such that their parts contact each other and the other parts contact the insulator 12.

Accordingly, the both electrode leads 11 may pass between one first terrace forming portion 110A and one second terrace forming portion 110B and protrude out of the battery case 100.

The other first terrace forming portion 110A and the other second terrace forming portion 110B may face each other. The other first terrace forming portion 110A and the other second terrace forming portion 110B may contact each other and be sealed together.

The depth of the other first terrace forming portion 110A and the other second terrace forming portion 110B may be larger than the depth of one first terrace forming portion 110A and one second terrace forming portion 110B. A difference between the sum of depths of the other first terrace forming portion 110A and the other second terrace forming portion 110B and the sum of depths of one first terrace forming portion 110A and one second terrace forming portion 110B may correspond to the thickness of the coupled part of the electrode lead 11 and the insulator 12.

Meanwhile, in the same way as the second embodiment described above, the battery case 100 may not include the connection portion 103. In addition, in the same way as the third embodiment described above, the terrace forming portion 110 may not be formed in one of the first cover portion 101 and the second cover portion 102.

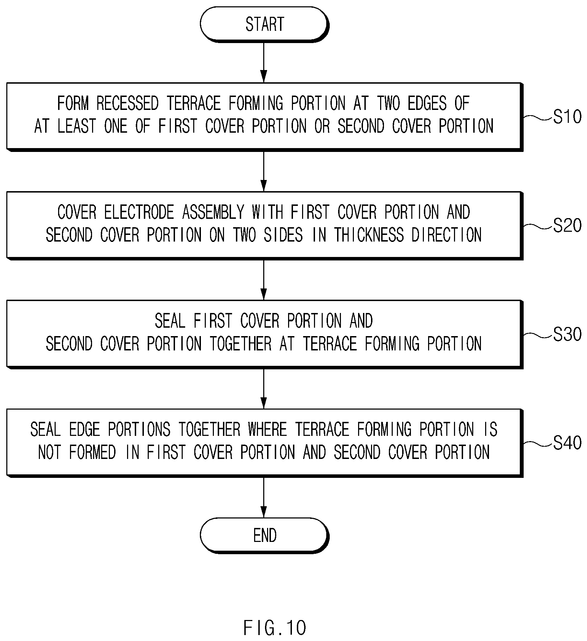

FIG. 10 is a flowchart of a method for manufacturing the battery cell according to an embodiment of the present disclosure.

The method for manufacturing the battery cell according to an embodiment of the present disclosure may include the steps of: (S10) forming the recessed terrace forming portion 110 at the both edges of at least one of the first cover portion 101 or the second cover portion 102 (hereinafter, "forming step"), (S20) covering the electrode assembly 10 with the first cover portion 101 and the second cover portion 102 on the both sides in the thickness direction (hereinafter, "covering step") and (S30) sealing the first cover portion 101 and the second cover portion 102 together at the terrace forming portion 110 (hereinafter, "sealing step").

In the forming step S10, the terrace forming portion 110 may be formed by a forming process. More specifically, the terrace forming portion 110 may be formed by applying force to the both edges of at least one of the first cover portion 101 or the second cover portion 102 having a sheet shape using a mold.

In the covering step S20, the concave side of the terrace forming portion 110 may face the outside of the battery case 100.

In particular, when the first cover portion 101 and the second cover portion 102 are connected together by the connection portion 103, each of the first boundary B1 between the connection portion 103 and the first cover portion 101 and the second boundary B2 between the connection portion 103 and the second cover portion 102 may be folded. Accordingly, the center portion 104 of the connection portion 103 may face the electrode assembly 10, and the end portion 105 of the connection portion 103 may face the terrace forming portion 110.

Hereinafter, in the same way as the first, second, and fourth embodiments described above, the covering step S20 and the sealing step S30 will be described based on the terrace forming portion 110 being formed in each of the first cover portion 101 and the second cover portion 102.

In the covering step S20, the terrace forming portion 110 (i.e., the first terrace forming portion 110A) of the first cover portion 101 and the terrace forming portion 110 (i.e., the second terrace forming portion 110B) of the second cover portion 102 may contact each other. More specifically, the first terrace forming portion 110A and the second terrace forming portion 110B may contact each other with the electrode lead 11 and the insulator 12 interposed between them.

In the sealing step S30, the first terrace forming portion 110A and the second terrace forming portion 110B may be sealed together. More specifically, parts of the first terrace forming portion 110A and the second terrace forming portion 110B may be sealed together, and the other parts may be sealed with the insulator 12.

Hereinafter, in the same way as the third embodiment described above, the covering step S20 and the sealing step S30 will be described based on the terrace forming portion 110 being formed in one of the first cover portion 101 and the second cover portion 102.

In the covering step S20, the terrace forming portion 110 may contact the both edges of the other of the first cover portion 101 and the second cover portion 102.

In the sealing step S30, the terrace forming portion 110 may be sealed with the both edges of the other of the first cover portion 101 and the second cover portion 102. More specifically, a part of the terrace forming portion 110 may be sealed with the both edges of the other of the first cover portion 101 and the second cover portion 102, and the other part of the terrace forming portion 110 may be sealed with the insulator 12.

Meanwhile, the method for manufacturing the battery cell may further include the step S40 of sealing the edge portions 101a and 102a of the first cover portion 101 and the second cover portion 102 where the terrace forming portion 110 is not formed (hereinafter, 'additional sealing step').

In the additional sealing step S40, the edge portion 101a (i.e., the first edge portion) of the first cover portion 101 and the edge portion 102a (i.e., the second edge portion) of the second cover portion 102 may be sealed together to form the sealing portion 140.

When the first cover portion 101 and the second cover portion 102 are connected together by the connection portion 103, the sealing portion 140 may be disposed on the opposite side to the connection portion 103 with the electrode assembly 10 interposed between them. In contrast, when the battery case 100 does not include the connection portion 103, the sealing portion 140 may be disposed on the both sides of the electrode assembly 10.

The additional sealing step S40 may include a process of folding at least one of the edge portion 101a (i.e., the first edge portion) of the first cover portion 101 or the edge portion 102a (i.e., the second edge portion) of the second cover portion 102.

More specifically, in the additional sealing step S40, at least one of the first edge portion 101a or the second edge portion 102a may be folded to face the terrace forming portion 110. For details, reference is made to the description relating to the sealing portion 140 in FIGS. 4 and 5.

The foregoing description has been made to describe the technical aspects of the present disclosure by way of example, and persons having ordinary skill in the technical field pertaining to the present disclosure would have made a variety of modifications and changes without departing from the essential features of the present disclosure.

Therefore, the disclosed embodiments are provided to describe the technical aspects of the present disclosure but not intended to be limiting, and the technical scope of the present disclosure is not limited by these embodiments.

The scope of protection of the present disclosure should be interpreted by the appended claims, and it should be interpreted that all the technical aspects within the equivalent scope are included in the scope of protection of the present disclosure.

**[List of Reference Numerals]**

| | | | |
|---|---|---|---|
| 1: | Battery cell | 10: | Electrode assembly |
| 11: | Electrode lead | 12: | Insulator |
| 100: | Battery case | 101: | First cover portion |
| 101a: | First edge portion | 102: | Second cover portion |
| 102a: | Second edge portion | 103: | Connection portion |
| 104: | Center portion | 105: | End portion |
| 110: | Terrace forming portion | 110A: | First terrace forming portion |
| 110B: | Second terrace forming portion | 111: | Sealing surface |
| 112: | First peripheral surface | 113: | Second peripheral surface |
| 140: | Sealing portion | | |

## Claims

1. A battery cell comprising:
an electrode assembly; and
a battery case including a first cover portion and a second cover portion covering both sides of the electrode assembly in a thickness direction,
wherein a recessed terrace forming portion is formed at both edges of at least one of the first cover portion or the second cover portion, and
wherein the first cover portion and the second cover portion are sealed together at the terrace forming portion.

2. The battery cell according to claim 1,
wherein the first cover portion includes a first edge portion where the terrace forming portion is not formed,
wherein the second cover portion includes a second edge portion where the terrace forming portion is not formed,
wherein the first edge portion and the second edge portion are sealed together, and
wherein at least one of the first edge portion or the second edge portion is folded to face the terrace forming portion.

3. The battery cell according to claim 1,
wherein the terrace forming portion includes:
a recessed first terrace forming portion at the both edges of the first cover portion; and
a recessed second terrace forming portion at the both edges of the second cover portion, the second terrace forming portion being sealed with the first terrace forming portion.

4. The battery cell according to claim 1, further comprising:
an electrode lead connected to the electrode assembly and protruding out of the battery case,
wherein the terrace forming portion is concave towards the electrode lead.

5. The battery cell according to claim 4, further comprising:
an insulator that wraps around a part of the electrode lead and is sealed with a part of the terrace forming portion.

6. The battery cell according to claim 4,
wherein the terrace forming portion is open in a direction in which the electrode lead protrudes.

7. The battery cell according to claim 4,
wherein the terrace forming portion includes:
a sealing surface where sealing is done;
a first peripheral surface connecting the first cover portion or the second cover portion to the sealing surface; and
a pair of second peripheral surfaces connected to the sealing surface and the first peripheral surface and facing each other.

8. The battery cell according to claim 7,
wherein the first peripheral surface faces a direction parallel to the direction in which the electrode lead protrudes, and
wherein the pair of second peripheral surfaces face each other in a width direction of the electrode lead.

9. The battery cell according to claim 1,
wherein the battery case further includes a connection portion connecting the first cover portion and the second cover portion integrally,
wherein the connection portion is flat, and
wherein each of a first boundary between the connection portion and the first cover portion and a second boundary between the connection portion and the second cover portion is folded.

10. The battery cell according to claim 9,
wherein a gap between the first terrace forming portion and the second terrace forming portion is equal to a width of the connection portion when the battery case is unfolded.

11. The battery cell according to claim 9,
wherein the width of the connection portion corresponds to a thickness of the electrode assembly.

12. The battery cell according to claim 9,
wherein the connection portion includes:
a center portion that faces the electrode assembly; and
an end portion extended from the center portion and connected to the terrace forming portion.

13. The battery cell according to claim 12,
wherein the terrace forming portion includes:
a sealing surface where sealing is done;
a first peripheral surface connecting the first cover portion or the second cover portion to the sealing surface; and
a pair of second peripheral surfaces connected to the sealing surface and the first peripheral surface and facing each other,
wherein one of the pair of second peripheral surfaces is connected to the end portion.

14. The battery cell according to claim 13,
wherein one of the pair of second peripheral surfaces faces the end portion and is in contact with or adjacent to the end portion.

15. The battery cell according to claim 1,
wherein the electrode assembly is disposed between the both terrace forming portions, and
wherein a distance between the both terrace forming portions corresponds to one of a length or a width of the electrode assembly.

16. The battery cell according to claim 15,
wherein a length of the terrace forming portion corresponds to the other of the length or the width of the electrode assembly.

17. A battery case configured to accommodate an electrode assembly, the battery case comprising:
a first cover portion covering a side of the electrode assembly in a thickness direction; and
a second cover portion covering an opposite side of the electrode assembly in the thickness direction,
wherein a recessed terrace forming portion is formed at both edges of at least one of the first cover portion or the second cover portion.

18. A method for manufacturing a battery cell including a battery case including a first cover portion and a second cover portion, and an electrode assembly housed in the battery case, the method comprising the steps of:
forming a recessed terrace forming portion at both edges of at least one of the first cover portion or the second cover portion;
covering the electrode assembly with the first cover portion and the second cover portion on both sides in a thickness direction; and
sealing the first cover portion and the second cover portion together at the terrace forming portion.

19. The method for manufacturing the battery cell according to claim 18,
wherein the first cover portion and the second cover portion are connected integrally by a connection portion, and
wherein the step of bringing the first cover portion and the second cover portion into contact with each other comprises folding each of a first boundary between the connection portion and the first cover portion and a second boundary between the connection portion and the second cover portion.

20. The method for manufacturing the battery cell according to claim 18, further comprising the step of:
sealing the edge portions together where the terrace forming portion is not formed in the first cover portion and the second cover portion,
wherein the step of sealing the edge portions together where the terrace forming portion is not formed comprises a process of folding at least one of the edge portion of the first cover portion or the edge portion of the second cover portion.
